# EUROPÄISCHE PATENTSCHRIFT

(11) **EP 2 336 443 B1**
(45) Veröffentlichungstag und Bekanntmachung des Hinweises auf die Patenterteilung: **29.05.2013**
(21) Anmeldenummer: 10194356.1
(22) Anmeldetag: 09.12.2010
(51) Int. Cl.: E04B 1/68, E06B 1/62

(54) **Dichtband und Verfahren zur Ausrüstung eines Bauteils mit diesem Dichtband**
Seal belt and method for equipping a component with same
Bande d'étanchéité et procédé d'équipement d'un composant pourvu d'une bande d'étanchéité

(30) Priorität: 11.12.2009 EP 09178899; 11.12.2009 EP 09178897; 24.03.2010 EP 10157518
(43) Veröffentlichungstag der Anmeldung: 22.06.2011
(73) Patentinhaber: ISO-Chemie GmbH, 73431 Aalen (DE)
(72) Erfinder:
(74) Vertreter: Wächter, Jochen

(56) Entgegenhaltungen:
- EP-A2- 1 811 111
- EP-B1- 1 131 525
- WO-A1-2005/106176
- DE-A1-102008 025 019
- US-A- 4 204 373

## Beschreibung

Die Erfindung bezieht sich auf ein Dichtband für das Abdichten einer Fuge, beispielsweise zwischen einem Rahmenprofil eines Fensters oder einer Tür und einer Gebäudewand, sowie auf ein Verfahren zur Ausrüstung eines Bauteils mit diesem Dichtband.

Aus EP 1 131 525 B1 ist ein vorkomprimiertes Dichtband bekannt, das aus einem elastisch rückstellfähigen Schaumstoffstreifen rechteckigen Querschnitts besteht, der in komprimiertem Zustand vollständig von einer Umhüllung umschlossen ist, die von einer Kunststofffolie gebildet ist. Zur Festlegung des Schaumstoffstreifens innerhalb der Umhüllung ist er an seiner Unterseite mit der Umhüllung verklebt, und die Umhüllung ist ihrerseits an ihrer Unterseite mit gesonderten Klebemitteln, beispielsweise einem doppelseitig klebenden Band, an einem Rahmenprofil anheftbar.

Dichtbänder dieser Art werden an dem abzudichtenden Rahmenprofil angeklebt, und nach Montage des Rahmenprofils in einer Gebäudewandöffnung wird die Umhüllung aufgerissen, um es dem Schaumstoffstreifen zu ermöglichen, sich elastisch rückzustellen und damit das Rahmenprofil an der Gebäudewand abzudichten.

In US 4 204 373 ist ein Dichtband beschrieben, das aus einer flachen Leiste zum Ankleben an ein Rahmenprofil und einem darauf angeordneten Schaumstoffstreifen besteht. Der Schaumstoffstreifen ist von einer Folie aus Papier oder Kunststoff abgedeckt, die an der flachen Leiste angeklebt ist und den Schaumstoffstreifen im komprimierten Zustand hält. Im Randstreifen der Abdeckfolie verlaufen Aufreißfäden, mit deren Hilfe die Folie nach Installation des mit dem Dichtband versehenen Rahmenprofils im Bauwerk aufgerissen werden kann.

Bei diesen bekannten Dichtbändern ist jedoch nachteilig, dass sie nur auf ebene Rahmen aufgeklebt werden können. Oftmals ist es aber auch wünschenswert, Dichtbänder unmittelbar an Fensterrahmenprofilen anzubringen, welche nach außen vorragende längslaufende Profilleisten aufweisen.

Für einen solchen Einsatz wurde in DE 10 2008 025 019 A1 ein Dichtband offenbart, welches sich zwischen winkelförmigen Enden zweier Randprofilleisten eines Fensterrahmens fixieren lässt, indem eine biegesteife Schicht, auf der der Weichschaumstoff angeordnet ist, in den Zwischenraum zwischen den Profilleisten eingebracht wird und durch die winkelförmigen Enden gegen ein Herausrutschen gesichert wird.

Diese Ausführungsform besitzt den Nachteil, dass sie lediglich bei einem bestimmten Rahmenprofil mit genau zwei seitlichen Profilleisten angewendet werden kann, während andere Rahmenprofile mit mehreren Profilleisten nicht in Frage kommen. Außerdem erstreckt sich der Schaumstoff von der biegesteifen Schicht aus zunächst nach innen in Richtung des Rahmens, sodass für die gewünschte Abdichtung des Zwischenraums zwischen Rahmenprofil und Mauerwerk die biegesteife Schicht zerstört werden muss.

Aus WO 2005/106176 A1 ist schließlich eine Dichtleiste bekannt, die aus Kunststoff besteht. Auf einem Abschnitt der Dichtleiste ist ein Dichtband aus elastisch rückstellfähigem Weichschaum befestigt. Die Kunststoffleiste ist an einer Sollknickstelle biegbar ausgestaltet.

Der Erfindung liegt die Aufgabe zugrunde, ein Dichtband zu schaffen, das direkt mit einer Vielzahl unterschiedlicher Rahmenprofile verbunden werden kann und den Zwischenraum zwischen Rahmenprofil und Mauerwerk abdichtet, sowie ein Verfahren zum Anbringen eines solchen Dichtbands am Rahmenprofil anzugeben.

Diese Aufgabe wird durch die Merkmale des Anspruchs 1 bzw. des Anspruchs 12 gelöst.

Das erfindungsgemäße Dichtband umfasst einen elastisch rückstellfähigen Schaumstoffstreifen und ein streifenförmiges Element, das unterhalb des Schaumstoffstreifens angeordnet ist. Dabei weist das streifenförmige Element eine höhere Biegefestigkeit auf als der Schaumstoffstreifen und weist zwei Sollknickstellen derart auf, dass zwei Schenkel des streifenförmigen Elements an der den zwei Sollknickstellen gegensinnig biegbar sind.

Mit dieser Ausgestaltung kann das Dichtband flexibel und mit wenigen Handgriffen an unterschiedlichen Rahmenprofilen angebracht werden und dichtet die Fuge zwischen Rahmenprofil und Mauerwerk hervorragend ab. erfindungsgemäß wird eine beidseitige sichere Klemmung des streifenförmigen Elements und damit des Dichtbands im abzudichtenden Bauteil möglich, wobei das streifenförmige Element wegen seiner in den Ursprungszustand zurückdrängenden Bestrebung eine beidseitig sichere Verklemmung in entsprechenden Profilkanälen des Rahmenbauteils sicherstellt.

In einer bevorzugten Ausführungsform ist der Schaumstoffstreifen fest mit dem streifenförmigen Element verbunden. Dadurch wird eine sichere Verbindung zwischen den beiden Schichten erzeugt und ein Verrutschen der Schichten gegeneinander verhindert.

Vorteilhafterweise ist das streifenförmige Element aus biegesteifem Schaumstoff gebildet. Die dadurch erzielbaren Vorteile sind die elastische Rückstellkraft des umgebogenen Schenkels, welche für eine sichere Verklemmung des Schenkels im Profilkanal sorgt, sowie die hervorragenden Dichtwerte des biegesteifen Schaumstoffs.

Vorteilhafterweise weist das streifenförmige Element eine Biegefestigkeit von mehr als 200 kPa, bevorzugt mehr als 250 kPa, auf. In einer weiteren bevorzugten Ausführungsform weist das streifenförmige Element eine Biegefestigkeit von mehr als 300 kPa, bevorzugt mehr als 400 kPa, auf. In einer besonders bevorzugten Ausführungsform weist das streifenförmige Element eine Biegefestigkeit von mehr als 500 kPa, bevorzugt mehr als 1.000 kPa, und mehr bevorzugt mehr als 2.000 kPa auf.

Vorteilhafterweise sind die zwei Sollknickstellen durch eine Ausnehmung gebildet. Auf diese Weise wird das Umbiegen jedes Schenkels der biegesteifen Schicht erleichtert und gleichzeitig bleibt eine Rückstellkraft im umgebogenen Schenkel vorhanden.

In einer bevorzugten Ausführungsform ist die Ausnehmung sich nach außen verbreiternd ausgestaltet. Dadurch wird gewährleistet, dass das Umbiegen des Schenkels besonders einfach erfolgen kann und das streifenförmige Element im umgebogenen Zustand des Schenkels dennoch eine integrale, bevorzugt sogar geschlossene Einheit bildet.

Vorzugsweise weisen die zwei umbiegbaren Schenkel in einem Endabschnitt ein Arretiermittel auf. Auf diese Weise wird die Verklemmung des umgebogenen Schenkels in einem Profilkanal des Rahmenbauteils unterstützt und ein versehentliches Herausrutschen des umgebogenen Schenkels aus dem Profilkanal noch weiter minimiert.

Ebenso ist es möglich, dass die zwei umbiegbaren Schenkel selbsklebend ausgestaltet sind, was zur dauerhaften Befestigung des Schenkels am abzudichtenden Rahmenbauteil dient.

Vorzugsweise ist der Schaumstoffstreifen zumindest teilweise von einer folienhaften Umhüllung umgeben und von dieser in einem vorkomprimierten Zustand gehalten. Auf diese Weise ist es möglich, das Dichtband einfach zu lagern und zu transportieren und es erst nach dessen Befestigung am abzudichtenden Rahmenbauteil durch Öffnen der Umhüllung in seinen Funktionszustand zu bringen.

In einer Ausführungsform kann das Dichtband zu einer Rolle aufgewickelt sein, was den Transport und die Lagerung des Dichtbandes erheblich vereinfacht.

Eine besonders vorteilhafte Anwendung des erfindungsgemäßen Dichtbandes liegt in einem Bauteil mit zwei nach oben offenen Profilkanälen und dem Dichtband mit den zwei gegensinnig umbiegbaren Schenkeln, wobei die zwei Schenkel des streifenförmigen Elements im gebogenen Zustand in den zwei Profilkanälen eingeklemmt sind. Ein derartiges Bauteil ist auf besonders einfache Weise für eine hervorragende Abdichtung gegen das Mauerwerk ausgerüstet.

Das erfindungsgemäße Verfahren zum Ausrüsten eines Bauteils mit einem Dichtband umfasst folgende Schritte: Bereitstellen eines Bauteils mit zwei Profilkanällen, die nach oben jeweils in eine Öffnung übergehen; Bereitstellen eines Dichtbands mit einem biegesteifen streifenförmigen Element, das zwei Sollknickstellen aufweist gegensinniges; Umbiegen von zwei Schenkeln des streifenförmigen Elements an den zwei Sollknickstellen; und Einbringen der zwei umgebogenen Schenkel in die zwei Profilkanäle und dadurch Verklemmen der zwei umgebogenen Schenkel in den zwei Profilkanälen.

Mit diesem Verfahren kann ein Bauteil mit wenigen Handgriffen und in kurzer Zeit zur Erzielung einer hervorragenden Abdichtung gegenüber dem Mauerwerk mit dem Dichtband ausgerüstet werden. Die doppelseitige Befestigung schafft eine sichere und dauerhafte Verbindung zwischen Bauteil und Dichtband.

Die Erfindung wird nachfolgend unter Bezugnahme auf in den Zeichnungen dargestellte Ausführungsformen näher erläutert.
- Fig. 1: ist eine schematische Querschnittsansicht einer ersten Ausführungsform des erfindungsgemäßen Dichtbands;
- Fig. 2: ist eine schematische Querschnittsansicht der ersten Ausführungsform des erfindungsgemäßen Dichtbands, befestigt an einem Bauteil;
- Fig. 3: ist eine schematische Querschnittsansicht einer zweiten Ausführungsform des erfindungsgemäßen vorkomprimierten Dichtbands;
- Fig. 4a und 4b: sind schematische Querschnittsansichten von zwei Varianten der zweiten Ausführungsform des erfindungsgemäßen Dichtbands, befestigt an einem Bauteil;
- Fig. 5: ist eine vergrößerte schematische Querschnittsansicht eines Ausschnitts einer dritten Ausführungsform des erfindungsgemäßen Dichtbands;
- Fig. 6: ist eine vergrößerte schematische Querschnittsansicht des Ausschnitts der dritten Ausführungsform des erfindungsgemäßen Dichtbands, befestigt an einem Bauteil;
- Fig. 7: ist eine vergrößerte schematische Querschnittsansicht eines Ausschnitts einer vierten Ausführungsform des erfindungsgemäßen Dichtbands;
- Fig. 8: ist eine vergrößerte schematische Querschnittsansicht des Ausschnitts der vierten Ausführungsform des erfindungsgemäßen Dichtbands, befestigt an einem Bauteil;
- Fig. 9: ist eine vergrößerte schematische Querschnittsansicht eines Ausschnitts einer fünften Ausführungsform des erfindungsgemäßen Dichtbands;
- Fig. 10: ist eine vergrößerte schematische Querschnittsansicht des Ausschnitts der fünften Ausführungsform des erfindungsgemäßen Dichtbands, befestigt an einem Bauteil;
- Fig. 11: ist eine vergrößerte schematische Querschnittsansicht eines Ausschnitts einer sechsten Ausführungsform des erfindungsgemäßen Dichtbands; und
- Fig. 12: ist eine vergrößerte schematische Querschnittsansicht des Ausschnitts der sechsten Ausführungsform des erfindungsgemäßen Dichtbands, befestigt an einem Bauteil.

In den Zeichnungen sind Schaumstoffstreifen, Umhüllungen, Klebebänder, streifenförmige Elemente etc. teilweise in einem gewissen Abstand zueinander dargestellt, um die einzelnen Elemente, die das Dichtband bilden, klar voneinander abzuheben. In Wirklichkeit liegen diese Elemente jeweils eng aufeinander auf.

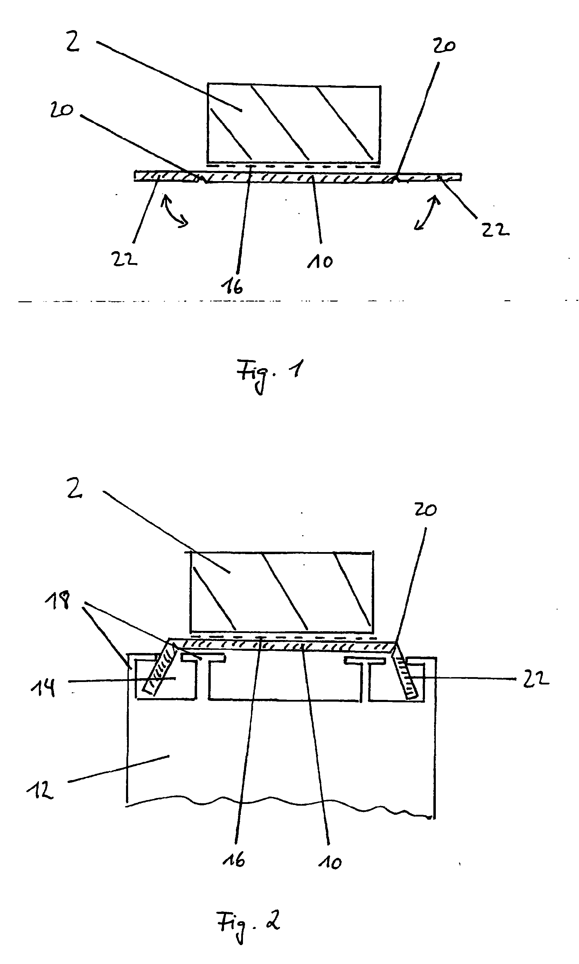

In Fig. 1 bis 4 ist ein Schaumstoffstreifen 2 dargestellt, der im dargestellten Beispiel einen rechteckigen Querschnitt hat. Der Schaumstoffstreifen 2 kann aus jedem beliebigen offenzelligen oder geschlossenzelligen Weichschaumstoff gebildet sein, z.B. aus Polyurethan oder Polyethylen, und kann für eine verzögerte Rückstellung imprägniert sein. Eine mehrlagige Anordnung mehrerer aufeinander laminierter unterschiedlicher Schaumstoffmaterialien ist ebenso denkbar wie die Anordnung einer imprägnierten Schaumstoffschicht auf oder neben einer nicht imprägnierten Schaumstoffschicht. Insbesondere in Querrichtung des Dichtbands können verschiedene Schaumstoffschichten aneinander angrenzend angeordnet sein, etwa um unterschiedliche Luftdurchlässigkeiten des Dichtbands im Innen- und Außenbereich bzw. ein Dampfdiffusionsgefälle zu gewährleisten. Es ist auch eine nicht aneinander angrenzende Anordnung von zwei oder mehr Schaumstoffstreifen 2 auf dem streifenförmigen Element 10 möglich.

Der Schaumstoffstreifen 2 erstreckt sich in seiner Längsrichtung weiter als in seiner Querrichtung und weist in den dargestellten Ausführungsformen zwei Seitenflächen 6 und zwei Querflächen 8, 9 (Oberseite 8 und Unterseite 9) auf, welche die beiden Seitenflächen 6 verbinden.

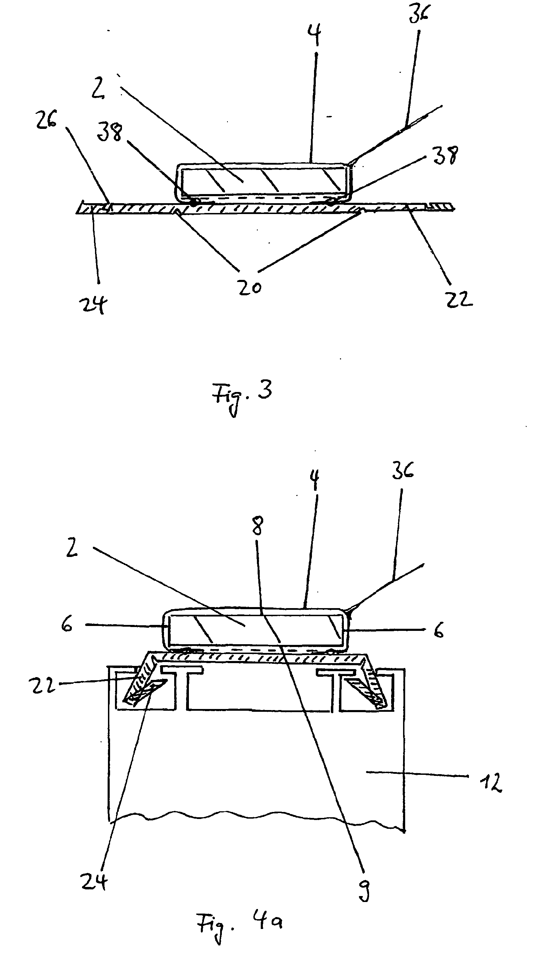

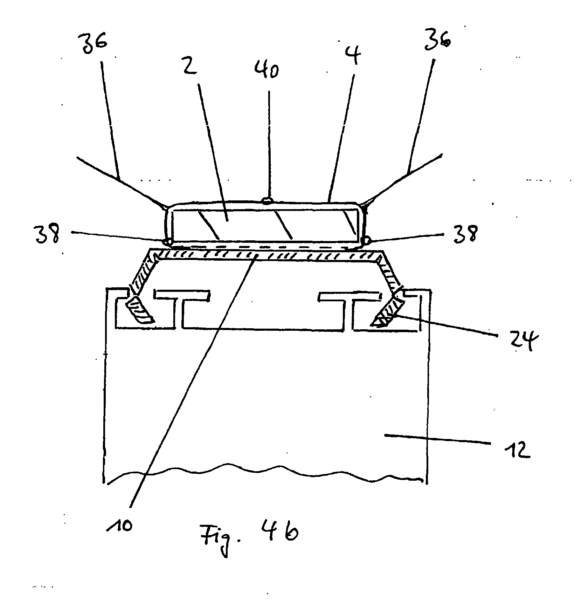

In bestimmten bevorzugten Ausführungsformen (Fig. 3, 4a und 4b) ist der Schaumstoffstreifen 2 zumindest teilweise von einer folienhaften Umhüllung 4 umgeben und wird von dieser in einem vorkomprimierten Zustand gehalten.

Das Material der Umhüllung 4 kann ein Folienmaterial, ein Gittergewebe, Papier oder anderes Material sein, das für den genannten Einsatzzweck geeignet ist. Außerdem sind auch laminierte Folien verwendbar, die aus einer Kunststofffolie bestehen, die mit einem Trägermaterial (z.B. Vlies) laminiert ist, oder gewebeverstärkte Folien. All diese Materialien sind mit dem Ausdruck "folienhaft" umschrieben. Auch Kombinationen dieser Materialien sind möglich. Bevorzugt ist allerdings eine thermoplastische Folie oder eine Schrumpffolie, welche sich unter Wärmeeinfluss zusammenzieht.

Im Bereich der Unterseite 9 des Schaumstoffstreifens 2 ist ein streifenförmiges Element 10 angeordnet, das in Querrichtung eine gewisse Biegefestigkeit aufweist. Die Biegefestigkeit sollte so hoch sein, dass das streifenförmige Element 10 zumindest teilweise die Kraft aufnimmt, welche von der Expansionsbestrebung des Schaumstoffstreifens 2 ausgeht und üblicherweise zu einer Verformung der flexiblen Umhüllung 4 hin zu einem Schlauch mit ovalem oder sogar rundem Querschnitt führen würde, ohne dass das streifenförmige Element 10 selbst zu sehr verformt wird. Umgekehrt soll eine gewisse elastische Rückstellkraft des streifenförmigen Elements 10 nach dessen Verbiegung erhalten bleiben.

Als Material des streifenförmigen Elements 10 ist vorzugsweise ein Schaumstoff vorgesehen, der eine höhere, bevorzugt deutlich höhere Biegefestigkeit aufweist als der Schaumstoffstreifen 2. Näheres folgt hierzu weiter unten. In anderen Ausführungsformen kommt außerdem beispielsweise Pappe in Frage, es sind aber auch alle anderen möglichen biegesteifen Materialien, z.B. harte Kunststoffe, verwendbar.

In bestimmten Ausführungsformen sollte das streifenförmige Element 10 in Längsrichtung derart biegbar sein, dass das Dichtband noch zu einer Rolle aufgewickelt werden kann.

Ein doppelseitiges Klebeband 16 ist im dargestellten Beispielsfall zwischen der Unterseite 9 des Schaumstoffstreifens 2 und dem streifenförmigen Element 10 angeordnet und verbindet die beiden Elemente fest miteinander. Die feste Verbindung zwischen Schaumstoffstreifen 2 und streifenförmigem Element 10 kann auch über andere Mittel erfolgen, beispielsweise über thermoplastisches Laminieren. In einigen Ausführungsformen kann die feste Verbindung zwischen Schaumstoffstreifen 2 und streifenförmigem Element 10 unter Umständen auch entfallen.

Wie aus Fig. 2, 4a, 4b, 6, 8, 10 und 12 hervorgeht, wird das Dichtband an einem Bauteil 12 befestigt, vorzugsweise einem Rahmenprofil, etwa einem Fensterrahmenprofil. Derartige Rahmenprofile bestehen z.B. aus Kunststoff oder Metall und existieren in einer Vielzahl von Formen,die meist zwei Profilkanäle 14 aufweisen, welche durch vom Grundkörper des Bauteils abragende, meist abgewinkelte Profilleisten 18 definiert werden. Ebenso können die Profilkanäle 14 durch eine Längsrillung gebildet sein, die auch nur schwach ausgebildet sein kann. Die Profilkanäle 14 dienen an sich zum Aneinanderreihen von Rahmenprofilen, bilden aber auch gegen das Mauerwerk gerichtete Abschlüsse, die dann entsprechend abgedichtet werden müssen. Hierauf bezieht sich die vorliegende Erfindung.

Zum Zwecke einer einfachen und dauerhaften Verbindung zwischen dem Dichtungsband und dem Bauteil 12 weist das streifenförmige Element 10 zwei Sollknickstellen 20 auf. Die Sollknickstellen 20 dienen dazu, ein Umbiegen zweier Schenkel 22 des streifenförmigen Elements 10 nach unten zu gewährleisten. Hier werden diese beiden Schenkel 22 gegensinnig nach unten umgebogen. In den dargestellten bevorzugten Ausführungsformen befinden sich die Sollknickstellen 20 jeweils in einem Randbereich des streifenförmigen Elements 10, und der jeweilige Schenkel 22 bildet einen Endbereich des streifenförmigen Elements 10.

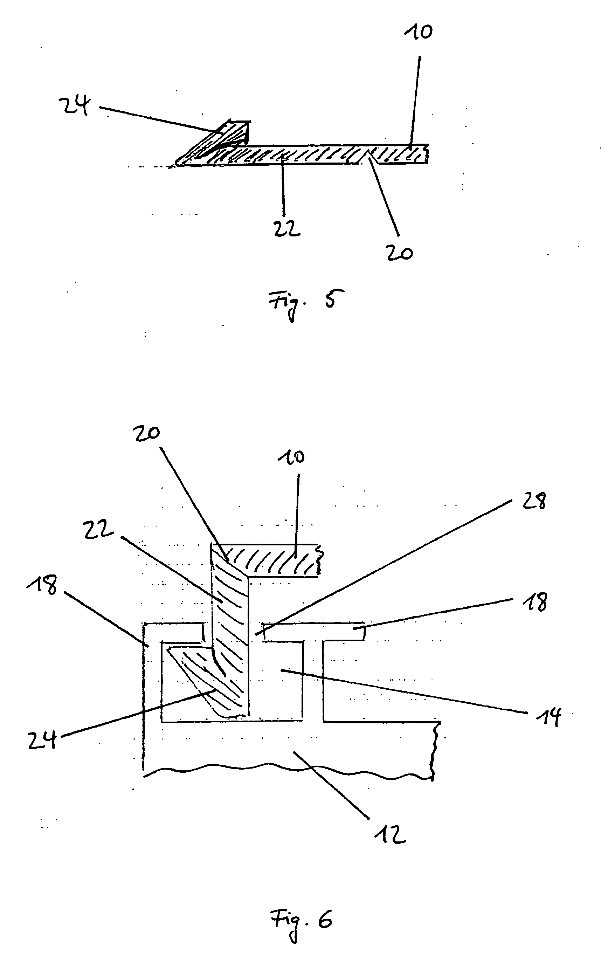

Wie insbesondere aus Fig. 5, 7 und 9 hervorgeht, sind die Sollknickstellen 20 vorzugsweise durch eine nach unten gerichtete Ausnehmung im streifenförmigen Element 10 gebildet. Diese Ausnehmung verbreitert sich vorzugsweise nach unten hin. In der bevorzugten dargestellten Ausführungsform laufen die Seitenwände, welche die Ausnehmung begrenzen, schräg auseinander und die Ausnehmung bildet somit im Querschnitt eine umgekehrte V-Form. Aufgrund des verbleibenden Materials im Steg oberhalb der Ausnehmung ist ein Bestreben zur Rückstellung des Schenkels 22 nach oben vorhanden. Es kann auch sinnvoll sein, dass der Schenkel 22 beim Umbiegen nach unten Material verdrängt, weil dies zu einer verstärkten Rückstelltendenz führt. Durch die Form und Größe der Ausnehmung kann die Bestrebung zur Rückstellung des Schenkels also materialabhängig eingestellt werden. Mit diesem einfachen Klappmechanismus kann eine Verklemmung des Schenkels 22 des streifenförmigen Elements 10 im Profilkanal 14 des Bauteils 12 stattfinden.

Neben der dargestellten Form der Ausnehmung ist als Sollknickstelle 20 ebenso ein einseitiger Schnitt, eine einseitige Fräsung, eine durch Thermoformen entstandene Dünnstelle oder eine durch eine andere Art der Materialschwächung erzielte Sollknickstelle möglich. Wie in den Fig. 2, 4a und 4b dargestellt ist, erfolgt erfindungsgemäß die Befestigung des Dichtbands am Bauteil 12 spiegelbildlich an den zwei entgegengesetzten Endbereichen des streifenförmigen Elements 10.

In den in Fig. 3, 4a und 4b dargestellten Ausführungsformen existiert zusätzlich zum zuvor erwähnten Bestreben der Schenkel 22 zur Rückstellung in die horizontale Position aufgrund der teilweise elastischen Eigenschaften des streifenförmigen Elements 10 eine weitere Kraftunterstützung, welche ebenfalls eine nach oben gerichtete Kraftkomponente auf den Schenkel 22 ausübt. Diese liegt im Expansionsbestreben des in der Umhüllung 4 aufgenommenen Schaumstoffstreifens 2 begründet. Aufgrund dessen fester Verbindung zum streifenförmigen Element 10 zieht der in der Umhüllung 4 aufgenommene Schaumstoffstreifen 2 durch die ihm innewohnende Expansionskraft die Umhüllung 4 in Richtung eines Ovals und erzeugt damit in den Bereichen des streifenförmigen Elements 10, welche knapp innerhalb der Sollknickstellen 20 liegen, eine nach oben gerichtete Kraftkomponente. Diese bewirkt in Kombination mit der teilweise elastischen Eigenschaft des an sich biegesteifen streifenförmigen Elements 10 eine Verstärkung der Klemmfunktion des Schenkels 22 in den abgewinkelten äußeren Profilleisten 18.

Es ist eine Vielzahl von Formen der Bauteile 12 sowie der zugehörigen Profilleisten 18 und damit der gebildeten Profilkanäle 14 bekannt. Um das erfindungsgemäße Dichtband möglichst flexibel bei verschiedenen Ausführungsformen von Profilkanälen 14 anwenden zu können, ist die in Fig. 3, 4a und 4b in zwei Varianten dargestellte Ausführungsform besonders geeignet. Hierbei ist in einem Endabschnitt des Schenkels 22 ein Arretiermittel 24 angeordnet, welches im vorliegenden Fall durch einen weiteren biegbaren Fortsatz des streifenförmigen Elements 10 gebildet ist. Dieser Fortsatz kann über eine weitere Sollknickstelle 26 mit dem Rest des Schenkels 22 verbunden sein, wird innerhalb des Profilkanals 14 entsprechend der jeweils vorliegenden Geometrie verbogen und verhakt sich dabei mit den Profilleisten 18. Zwei mögliche Arten des Verhakens sind in Fig. 4a und 4b dargestellt. Die das Arretiermittel 24 vom Rest des Schenkels 22 trennende Sollknickstelle 26 ist vorzugsweise als einfacher Schnitt von oben ausgebildet, und die äußere Kante des Arretiermittels 24 kann eine Abschrägung aufweisen.

Die in Fig. 5 und 6 dargestellte Ausführungsform weist als Arretiermittel 24 einen Arretiersteg auf, welcher mittels Thermoformen des Materials des streifenförmigen Elements 10 oder mittels eines Extrusionsverfahrens erzeugt oder angebracht werden kann. Der Arretiersteg kann auch andere Formen aufweisen, beispielsweise kann er seitliche Vorsprünge aufweisen oder in seinem Endbereich in Tannenbaumform ausgestaltet sein.

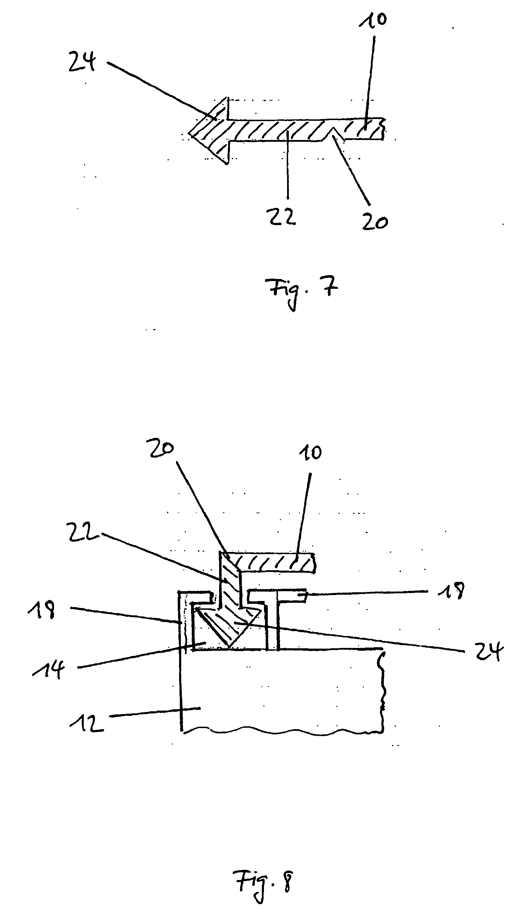

Die in Fig. 7 und 8 dargestellte Form des Arretiermittels 24 ist als Kederform ausgestaltet und dient zum seitlichen Einschieben in die Profilkanäle 14. Wenn das kederförmige Arretiermittel 24 elastisch genug ist, kann auch ein Einbringen des Arretiermittels von oben durch die Öffnung 28 des Profilkanals 14, welche in allen Ausführungsformen der Bauteile 12 einen verringerten Querschnitt im Vergleich zum Profilkanal 14 aufweist, erfolgen.

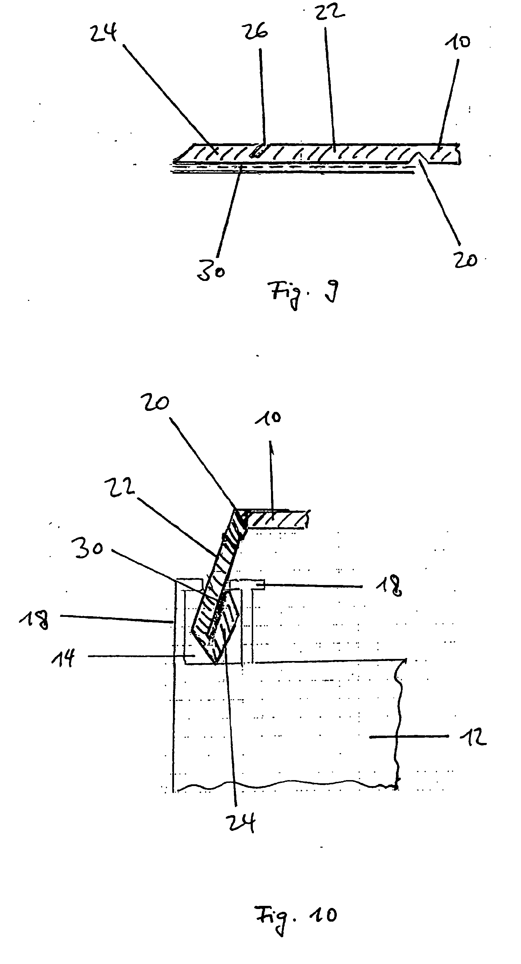

Die in Fig. 9 und 10 dargestellte Ausführungsform entspricht der Ausführungsform aus Fig. 3 und 4, wobei auf der Unterseite des Schenkels 22 eine Klebeschicht 30 angeordnet ist. Der als Arretiermittel 24 dienende Fortsatz kann hierbei nach innen umgebogen und gegen den Rest des Schenkels 22 verhaftet werden, wodurch sich ebenfalls eine vergrößerte Klemmwirkung innerhalb des Profilkanals 14 ergibt.

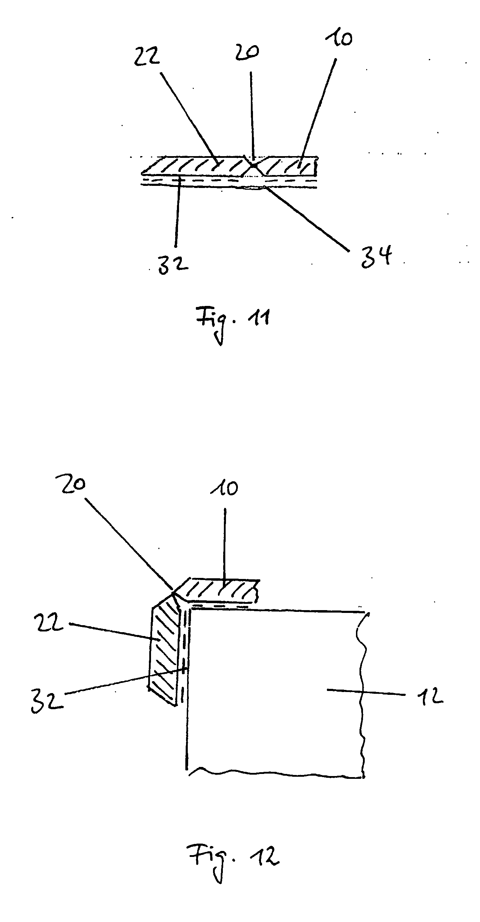

In Fig. 11 und 12 ist eine weitere Ausführungsform des erfindungsgemäßen Dichtbands dargestellt. Bei dieser ist die Sollknickstelle 20 vorzugsweise als zweiseitige Ausnehmung ausgebildet, wobei darauf zu achten ist, dass der verbleibende Mittelsteg noch ausreichend dick ist, um eine feste Verbindung des Schenkels 22 mit dem Rest des streifenförmigen Elements 10 auch nach dessen Umbiegen zu gewährleisten. Vorzugsweise ist eine Selbstklebeschicht 32 an der Unterseite des Randbereichs des streifenförmigen Elements 10 einschließlich des Schenkels 22 angebracht, welche mittels einer Abdeckfolie 34 bedeckt ist. Eine derartige Ausgestaltung des erfindungsgemäßen Dichtbands ist insbesondere für unprofilierte Bauteile 12, beispielsweise Holzfensterprofile, geeignet. Eventuell kann hierbei eine zusätzliche mechanische Befestigung der Schenkel 22 am Bauteil 12 erfolgen, etwa mittels Klammern.

In allen genannten Ausführungsformen kann die Klemmbefestigung mit einer Klebebefestigung kombiniert werden, d.h. die Oberflächen der Schenkel 22 können zusätzlich klebend ausgestaltet sein und durch eine Verhaftung mit mindestens einer Flanke des Profilkanals 14 die Klemmwirkung verstärken. Ebenso ist es möglich, zunächst einen Kleber in den Profilkanal 14 einzubringen und den Schenkel 22 anschließend in den Profilkanal 14 einzuführen. Außerdem kann ein zweiter, dünnerer Schaumstoffstreifen unten am streifenförmigen Element 10 befestigt sein, um den zwischen dem streifenförmigen Element 10 und dem Bauteil 12 in deren Mittelbereich entstehenden Hohlraum zumindest teilweise zu füllen.

Das erfindungsgemäße Verfahren zum Ausrüsten eines Bauteils mit einem Dichtband ist besonders einfach. Zunächst ist das streifenförmige Element 10 einschließlich seiner Schenkel 22 horizontal ausgerichtet und damit bei ausreichender Biegbarkeit des Materials des streifenförmigen Elements 10 sogar zur Rolle aufwickelbar. Nach dem Umbiegen der Stege 22 nach unten werden diese in die Profilkanäle 14 des Bauteils 12 eingefügt und bilden dort mit den meist winkelförmigen Profilleisten 18 eine formstabile Klemmbefestigung aus. In der Regel führt die Federkraft des Stegs im Bereich der Sollknickstelle 20 zu einer Verkeilung im Proflikanal 14 und damit zur dauerhaften Befestigung.

Wie schon erwähnt, kann das erfindungsgemäße Dichtband prinzipiell sowohl in Streifenform als auch als Rolle hergestellt werden. Bei besonders biegesteifen Materialien des streifenförmigen Elements 10 bleibt die Streifenform als einzige Möglichkeit.

Das Dichtband wird üblicherweise bereits vor dem Einbau oder sogar vor dem Transport des abzudichtenden Rahmenbauteils 12 an diesem befestigt. Nach dem Einbau in die entsprechende Gebäudeöffnung vor Ort muss dann unter Umständen lediglich noch die Umhüllung 4 geöffnet werden. Dabei bleibt das am Rahmenbauteil 12 befestigte streifenförmige Element 10 (welches üblicherweise nicht expansionsfähig ist) unverändert, während der Schaumstoffstreifen 2 nach oben expandiert und die Abdichtung der Fuge gewährleistet.

Insbesondere könnte auch eine Anbringung des Dichtbands an einem Fensterrahmenprofil bereits kurz nach der Fertigung desselben erfolgen, noch bevor daraus ein kompletter Fensterrahmen gefertigt wird.

Die in den Fig. 3, 4a und 4b dargestellte Umhüllung 4 kann in verschiedensten Variationen ausgebildet und an verschiedenen Stellen befestigt sein.

Bevorzugt ist eine Reißlasche 36 vorgesehen, welche durch zwei aneinandergefügte Abschnitte der Umhüllung 4 gebildet ist. Ebenso ist es möglich, lediglich eine fahnenartige Erstreckung der Umhüllung 4 vorzusehen. Durch Ziehen an der Reißlasche 36 wird die folienhafte Umhüllung 4 geöffnet und die Expansion des Schaumstoffstreifens 2 ermöglicht. Hierzu kann in der Umhüllung 4 mindestens eine Sollreißstelle 38, vorzugsweise eine Perforationslinie, vorgesehen sein. Die in Fig. 3, 4a und 4b dargestellten Positionen der Sollreißstellen 38 sind dabei bevorzugt, weil in diesem Fall nach dem Öffnen der Umhüllung 4 kein oder nur wenig Material am Schaumstoffstreifen 2 verbleibt. Jedoch ist auch eine Reihe anderer Positionen der Sollreißstellen 38 im Rahmen der Erfindung denkbar.

Ebenso ist es möglich, die Umhüllung 4 durch Zug an der Reißlasche 36 auch ohne Sollreißstelle 38 aufzureißen, wenn die Umhüllung 4 keinen großen Zugkräften widersteht, die Umhüllung 4 über einen Reißfaden aufzureißen oder die Umhüllung mit einem Messer aufzuschneiden oder mit einem anderen Hilfsmittel zu öffnen. Schließlich kann auch die gesamte Umhüllung 4 entfernt werden, wenn die Befestigung der Umhüllung am Schaumstoffstreifen 2 oder am streifenförmigen Element 10 durch Zug lösbar ist.

Die Umhüllung deckt im Beispiel der Fig. 3, 4a und 4b die beiden Seitenflächen 6 sowie die Oberseite 8 des Schaumstoffstreifens 2 ab. Im Bereich der Unterseite 9 des Schaumstoffstreifens 2 ist jeweils ein erster Abschnitt der Umhüllung 4 über einem Teilbereich der Unterseite 9 des Schaumstoffstreifens 2 angeordnet. Außerdem ist ein zweiter Abschnitt der Umhüllung 4 in einem zweiten Teilbereich der ersten Querfläche, hier Unterseite 9 des Schaumstoffstreifens 2, welche dem ersten Teilbereich gegenüberliegt, zwischen der ersten Querfläche 9 und dem streifenförmigen Element 10 angeordnet. Die beiden Abschnitte der Umhüllung 4 umfassen also die beiden unteren Kanten des Schaumstoffstreifens 2, sind nach innen umgeschlagen und dort vorzugsweise an dem streifenförmigen Element 10 befestigt, vorzugsweise verschweißt oder auflaminiert. Sie können aber auch am Schaumstoffstreifen 2 befestigt sein, etwa verklebt oder auflaminiert bzw. verschweißt. Zwischen den beiden Abschnitten der Umhüllung 4 bleibt die Unterseite 9 des Schaumstoffstreifens 2 von der Umhüllung 4 unbedeckt. Dort ist das doppelseitige Klebeband 16 befestigt. Das Klebeband 16 kann sich aber auch über die beiden Abschnitte der Umhüllung 4 erstrecken.

Auch ein durchgängiger Verlauf der Umhüllung 4 zwischen dem Schaumstoffstreifen 2 und dem streifenförmigen Element 10 ist denkbar. In diesem Fall wäre neben dem doppelseitigen Klebeband 16 noch ein weiteres doppelseitiges Klebeband notwendig, welches die Verbindung zwischen der Umhüllung 4 und dem streifenförmigen Element 10 herstellt.

Die Reißlasche 36 kann wie in Fig. 3 und 4a dargestellt auf nur einer Seite des Dichtbands ausgebildet sein. Es können aber auch zwei Reißlaschen 36 an beiden Seiten ausgebildet sein, wie in Fig. 4b dargestellt ist. In diesem vorteilhaften Fall kann eine weitere Sollreißstelle 40, vorzugsweise wieder eine Perforationslinie, im oberen Bereich der Umhüllung 4 vorhanden sein, welche bei Zug an den Reißlaschen 36 zuerst reißt und den Schaumstoffstreifen 2 expandieren lässt, bevor durch weiteren Zug an den beiden Reißlaschen 36 auch die Sollreißstellen 38 reißen und somit die Umhüllung 4 entfernt werden kann.

Es sind noch viele andere Ausführungsformen der vorliegenden Erfindung denkbar. Die unter Bezugnahme auf Fig. 1 bis 12 dargestellten Einzelheiten können auch bei den jeweils anderen Ausführungsformen verwendet werden.

In der Praxis sind die Schaumstoffstreifen 2 meist so vorkomprimiert, dass sie beim Entspannen vorzugsweise bis auf etwa das Fünf- bis Zehnfache ihrer im vorkomprimierten Zustand eingenommenen Dicke expandieren können, wovon aber häufig nur etwa die Hälfte ausgenutzt wird, um eine sichere Anlage an dem Gebäudeteil zu gewährleisten, das dem abzudichtenden Profilelement gegenüberliegt.

Als Material des streifenförmigen Elements 10 ist vorzugsweise ein Schaumstoff vorgesehen, der eine höhere Biegefestigkeit aufweist als der Schaumstoffstreifen 2, üblicherweise eine deutlich höhere Biegefestigkeit. Das streifenförmige Element 10 hat generell eine Biegefestigkeit von mehr als 200 kPa, bevorzugt mehr als 250 kPa. In einer bevorzugten Ausführungsform weist das streifenförmige Element eine Biegefestigkeit von mehr als 300 kPa, bevorzugt mehr als 400 kPa, auf. In einer besonders bevorzugten Ausführungsform weist das streifenförmige Element eine Biegefestigkeit von mehr als 500 kPa, bevorzugt mehr als 1.000 kPa, und mehr bevorzugt mehr als 2.000 kPa auf. Gleichzeitig muss das Material des streifenförmigen Elements 10 elastisch genug sein, dass es durch die Biegung an der Sollknickstelle 20 nicht bricht und weiterhin die Tendenz aufweist, sich in seine Ausgangsform zurückzustellen. Eine Obergrenze für die Biegefestigkeit liegt daher z.B. bei 10.000 kPa.

Das Material des Schaumstoffstreifens 2 hingegen weist eine Biegefestigkeit von weniger als 150 kPa, bevorzugt weniger als 125 kPa, mehr bevorzugt weniger als 100 kPa auf, in jedem Fall aber mehr als 0 kPa.

Die Biegefestigkeit des Materials des streifenförmigen Elements 10 bzw. des Schaumstoffstreifens 2 wird dabei in Anlehnung an die Norm ISO 1209-2, dritte Ausgabe aus dem Jahr 2007, bestimmt. Diese internationale Norm wird üblicherweise zum Messen der Biegefestigkeit von Kunststoffen verwendet, eignet sich aber in etwas abgewandelter Form auch ausgezeichnet für die Messung der Biegefestigkeit von Schaumstoffen.

Hierbei wird eine gleichmäßig veränderte Kraft in der Mitte zwischen zwei Auflagen senkrecht auf eine Probe aufgebracht und diese somit durchgebogen. Aus der gemessenen Kraft-/Deformationskurve wird die Biegefestigkeit berechnet (siehe Kapitel 3 der ISO 1209-2). Die Testvorrichtung ist in Kapitel 4, Fig. 1 näher dargestellt. Ein Beispiel für das verwendete Prüfgerät ist der Typ BZ2.5/TN1 S der Firma Zwick aus Ulm, Deutschland. Als Messdose wird hierbei z.B. der Typ KAP-Z für Kräfte bis 200 N eingesetzt.

Die Auflagen bestehen aus zwei parallelen zylindrischen Auflageelementen, die in derselben horizontalen Ebene angeordnet sind und von denen jedes einen Radius von (15 +/- 1) mm aufweist. Die Länge der Auflageelemente ist größer als die Breite der Proben und beträgt im vorliegenden Fall 80 mm.

Der Abstand L zwischen den Auflageelementen weicht bei der vorliegenden Messung von der ISO 1209-2 ab und ist auf (85 +/- 2) mm festgelegt. Das Kraftübertragungselement besitzt dieselbe Form wie die Auflageelemente. Auch die übrigen in Kapitel 5.1 der ISO 1209-2 angegebenen Größenangaben werden für den speziellen Einsatzzweck der Messung von Schaumstoffen geändert. Jede gemessene Schaumstoffprobe ist ein Quader mit Länge l = (150 +/- 3) mm, Breite b = (40 +/- 2) mm und Dicke d = (3,0 +/- 0,2) mm. Von den unter Kapitel 6 der ISO 1209-2 beschriebenen Testbedingungen wird die erste verwendet, also eine Messung bei (23 +/- 2) °C und (50 +/- 10) % relativer Luftfeuchtigkeit. Entgegen dem in Kapitel 7 der ISO 1209-2 angegebenen Geschwindigkeitswert der Bewegung des Kraftübertragungselements wird dieses lediglich mit (10 +/- 1 ) mm pro Minute nach unten bewegt. Außerdem wird die Kraft bis zu einer maximalen Durchbiegung des Schaumstoffs von 20 mm gemessen und der im Verlauf der Messung aufgetretene Maximalwert F_{R} der Kraft festgehalten.

Die Berechnung der Biegefestigkeit R (in kPa) ergibt sich gemäß Kapitel 8.1 der ISO 1209-2 somit aus der Formel R = 1,5 F_{R} * L / bd² * 10⁶, wobei F_{R} die maximale angewandte Kraft in kN ist, L der Abstand zwischen den Auflageelementen in mm, b die Breite der Probe in mm und d die Dicke der Probe in mm.

Bei den zuvor vorgegebenen Werten für L, b und d ergeben sich aus der gemessenen Kraft F_{R} für das Material des streifenförmigen Elements 10 und des Schaumstoffstreifens 2 die oben genannten Werte.

Die in den Fig. 3, 4a und 4b dargestellten Ausführungsformen sind in einer eher idealisierten Gestalt des Querschnitts des Schaumstoffstreifens 2 dargestellt. In Wirklichkeit ist nämlich die obere Querfläche 8 des Schaumstoffstreifens 2 durch den von innen wirkenden Druck zumindest ein wenig in Richtung einer Kuppelform ausgedehnt, sodass der Querschnitt des Schaumstoffstreifens 2 im vorkomprimierten Zustand eine vom Rechteck in gewissem Umfang, wenn auch nicht zu stark abweichende Gestalt annimmt. Auch eine gewisse Querdurchbiegung (Außenwölbung) des biegesteifen Elements 10 ist in der Praxis zu beobachten, vor allem bei großen Breiten des Dichtbands.

Die Erfindung wurde vorstehend am Beispiel eines Schaumstoffstreifens 1 mit rechteckigem Querschnitt beschrieben, weil dieses die Erläuterung der Erfindung und ihrer Merkmale sehr erleichtert. Mit "rechteckig" soll auch "quadratisch" umfasst sein. Der Fachmann erkennt indessen, dass sich die Erfindung in entsprechender Weise auch mit Schaumstoffstreifen 2 realisieren lässt, die vom Rechteck abweichende Querschnitte haben. Die angegebene Querschnittsgestalt des Schaumstoffstreifens 2 soll daher nicht einschränkend verstanden werden.

In der Figurenbeschreibung wurde die Erfindung beispielhaft anhand des Umbiegens der Schenkel 22 des streifenförmigen Elements 10 "nach unten" erläutert. Ebenso ist es möglich, die Schenkel 22 nach oben umzubiegen, wenn dies für bestimmte Anwendungen vorteilhaft ist. Daher können die Sollknickstellen 20 auch derart gestaltet sein, dass sie ein Umbiegen der Schenkel 22 nach oben fördern.

## Patentansprüche

1. Dichtband für das Abdichten einer Fuge, mit
einem elastisch rückstellfähigen Schaumstoffstreifen (2), und
einem streifenförmigen Element (10), das unterhalb des Schaumstoffstreifens (2) angeordnet ist und eine höhere Biegefestigkeit als der Schaumstoffstreifen (2) aufweist;
**dadurch gekennzeichnet,**
**dass** das streifenförmige Element (10) zwei Sollknickstellen (20) derart aufweist, dass zwei Schenkel (22) des streifenförmigen Elements (10) an den zwei Sollknickstellen (20) gegensinnig biegbar sind.

2. Dichtband nach Anspruch 1, **dadurch gekennzeichnet, dass** der Schaumstoffstreifen (2) fest mit dem streifenförmigen Element (10) verbunden ist.

3. Dichtband nach Anspruch 1 oder 2, **dadurch gekennzeichnet, dass** das streifenförmige Element (10) aus biegesteifem Schaumstoff gebildet ist.

4. Dichtband nach einem der vorangehenden Ansprüche, **dadurch gekennzeichnet, dass** das streifenförmige Element (10) eine Biegefestigkeit von mehr als 200 kPa, bevorzugt mehr als 300 kPa, mehr bevorzugt mehr als 500 kPa, noch mehr bevorzugt mehr als 1.000 kPa aufweist, wobei die Biegefestigkeit in Anlehnung an die Norm ISO 1209-2, dritle Ausgabe aus dem Jahr 2007 bestimmt wird.

5. Dichtband nach einem der vorangehenden Ansprüche, **dadurch gekennzeichnet, dass** die Sollknickstellen (20) durch eine Ausnehmung gebildet sind.

6. Dichtband nach Anspruch 5, **dadurch gekennzeichnet, dass** die Ausnehmung sich nach außen verbreiternd ausgestaltet ist.

7. Dichtband nach einem der vorangehenden Ansprüche, **dadurch gekennzeichnet, dass** die zwei umbiegbaren Schenkel (22) in einem Endabschnitt ein Arretiermittel (24) aufweisen.

8. Dichtband nach einem der vorangehenden Ansprüche, **dadurch gekennzeichnet, dass** die zwei umbiegbaren Schenkel (22) selbstklebend ausgestaltet sind.

9. Dichtband nach einem der vorangehenden Ansprüche, **dadurch gekennzeichnet, dass** der Schaumstoffstreifen (2) zumindest teilweise von einer folienhaften Umhüllung (4) umgeben ist und von dieser in einem vorkomprimierten Zustand gehalten ist.

10. Dichtband nach einem der vorangehenden Ansprüche, **dadurch gekennzeichnet, dass** das Dichtband zu einer Rolle aufgewickelt ist.

11. Bauteil (12) mit zwei nach oben offenen Profilkanälen (14) und einem Dichtband gemäß einem der vorangehenden Ansprüche, wobei die zwei Schenkel (22) des streifenförmigen Elements (10) im gegensinnig gebogenen Zustand in den zwei Profilkanälen (14) eingeklemmt sind.

12. Verfahren zum Ausrüsten eines Bauteils (12) mit einem Dichtband mit folgenden Schritten:
- Bereitstellen eines Bauteils (12) mit zwei Profilkanälen (14), von denen jeder nach oben in eine Öffnung (28) übergeht;
- Bereitstellen eines Dichtbands mit einem biegesteifen streifenförmigen Element (10), das zwei Sollknickstellen (20) aufweist;
- gegensinniges Umbiegen von zwei Schenkeln (22) des streifenförmigen Elements (10) an den zwei Sollknickstellen (20); und
- Einbringen der zwei umgebogenen Schenkel (22) in die zwei Profilkanäle (14) und dadurch Verklemmen der zwei umgebogenen Schenkel (22) in den zwei Profilkanälen (14).

## Claims

1. Sealing tape for sealing a joint, comprising a resiliently restorable foam strip (2), and a strip-shaped element (10), which is arranged underneath the foam strip (2) and has a greater flexural strength than the foam strip (2), **characterised in that** the strip-shaped element (10) comprises two predetermined fold points (20), such that two legs (22) of the strip-shaped element (10) can be bent in opposite directions at the two predetermined fold points (20).

2. Sealing tape according to claim 1, **characterised in that** the foam strip (2) is rigidly connected to the strip-shaped element (10).

3. Sealing tape according to either claim 1 or claim 2, **characterised in that** the strip-shaped element (10) is made of bend-resistant foam.

4. Sealing tape according to any of the preceding claims, **characterised in that** the strip-shaped element (10) has a flexural strength of greater than 200 kPa, preferably greater than 300 kPa, more preferably greater than 500 kPa, most preferably greater than 1,000 kPa, the flexural strength being determined according to the standard ISO 1209-2, third edition, 2007.

5. Sealing tape according to any of the preceding claims, **characterised in that** the predetermined fold points (20) are formed by a recess.

6. Sealing tape according to claim 5, **characterised in that** the recess is designed such that it widens towards the outside.

7. Sealing tape according to any of the preceding claims, **characterised in that** the two bendable legs (22) comprise a locking means (24) in an end portion.

8. Sealing tape according to any of the preceding claims, **characterised in that** the two bendable legs (22) are designed to be self-adhesive.

9. Sealing tape according to any of the preceding claims, **characterised in that** the foam strip (2) is enclosed at least in part by a film-like covering (4) and is held in a precompressed state thereby.

10. Sealing tape according to any of the preceding claims, **characterised in that** the sealing tape is wound up into a roll.

11. Component (12) comprising two profiled channels (14) which are open towards the top and a sealing tape according to any of the preceding claims, wherein the two legs (22) of the strip-shaped element (10), in the state in which they are bent in opposite directions, are clamped in the two profiled channels (14).

12. Method for equipping a component (12) with a sealing tape, comprising the following steps of:
- providing a component (12) comprising two profiled channels (14), each of which transitions upwards into an opening (28);
- providing a sealing tape comprising a bend-resistant strip-shaped element (10), which comprises two predetermined fold points (20);
- bending two legs (22) of the strip-shaped element (10) in opposite directions at the two predetermined fold points (20), and
- introducing the two bent legs (22) into the two profiled channels (14) and thus clamping the two bent legs (22) in the two profiled channels (14).

## Revendications

1. Bande d'étanchéité pour l'étanchéification d'un joint, comprenant
un ruban en mousse (2) capable de reprendre position élastiquement et
un élément en forme de ruban (10) qui est disposé sous le ruban en mousse (2) et présente une résistance à la flexion plus élevée que le ruban en mousse (2),
**caractérisée en ce**
**que** l'élément en forme de ruban (10) présente deux lieux d'inflexion prévue (20) de telle manière que deux branches (22) de l'élément en forme de ruban (10) puissent être pliées en sens contraire aux deux lieux d'inflexion prévue (20).

2. Bande d'étanchéité selon la revendication 1, **caractérisée en ce que** le ruban en mousse (2) est relié fixement à l'élément en forme de ruban (10).

3. Bande d'étanchéité selon la revendication 1 ou 2, **caractérisée en ce que** l'élément en forme de ruban (10) est formé à partir d'une mousse résistante à la flexion.

4. Bande d'étanchéité selon l'une quelconque des revendications précédentes, **caractérisée en ce que** l'élément en forme de ruban (10) présente une résistance à la flexion supérieure à 200 kPa, de manière préférée supérieure à 300 kPA, de manière plus préférée supérieure à 500 kPa, de manière encore plus préférée supérieure à 1.000 kPa, la résistance à la flexion étant déterminée sur le modèle de la norme ISO 1209-2, dans sa troisième version de 2007.

5. Bande d'étanchéité selon l'une quelconque des revendications précédentes, **caractérisée en ce que** les lieux d'inflexion prévue (20) sont formés par un évidement.

6. Bande d'étanchéité selon la revendication 5, **caractérisée en ce que** l'évidement est configuré de manière à s'élargir vers l'extérieur.

7. Bande d'étanchéité selon l'une quelconque des revendications précédentes, **caractérisée en ce que** les deux branches (22) repliables présentent dans une section d'extrémité un moyen de blocage (24).

8. Bande d'étanchéité selon l'une quelconque des revendications précédentes, **caractérisée en ce que** les deux branches (22) repliables sont configurées de manière auto-adhésive.

9. Bande d'étanchéité selon l'une quelconque des revendications précédentes, **caractérisée en ce que** le ruban en mousse (2) est entouré en partie au moins d'une enveloppe (4) pelliculaire et est maintenu par cette dernière dans un état préalablement comprimé.

10. Bande d'étanchéité selon l'une quelconque des revendications précédentes, **caractérisée en ce que** la bande d'étanchéité est enroulée pour former un rouleau.

11. Composant (12) comprenant deux canaux profilés (14) ouverts vers le haut et une bande d'étanchéité selon l'une quelconque des revendications précédentes, les deux branches (22) de l'élément en forme de ruban (10) étant coincées dans les deux canaux profilés (14) dans un état plié en sens contraire.

12. Procédé servant à équiper un composant (12) avec une bande d'étanchéité, comprenant les étapes suivantes consistant à :
- fournir un composant (12) comprenant deux canaux profilés (14), chacun desdits canaux profilés passant dans une ouverture (28) vers le haut ;
- fournir une bande d'étanchéité comprenant un élément en forme de ruban (10) résistant à la flexion, lequel présente deux lieux d'inflexion prévue (20) ;
- replier en sens contraire les deux branches (22) de l'élément en forme de ruban (10) aux lieux d'inflexion prévue (20) ; et
- introduire les deux branches (22) repliées dans les deux canaux profilés (14) et ce faisant coincer les deux branches (22) repliées dans les deux canaux profilés (14).
